# EUROPÄISCHE PATENTSCHRIFT

(11) **EP 3 269 258 B1**
(45) Veröffentlichungstag und Bekanntmachung des Hinweises auf die Patenterteilung: **18.03.2026**
(21) Anmeldenummer: 17180930.4
(22) Anmeldetag: 12.07.2017
(51) Int. Cl.: C14C 3/10, C14C 3/12, A61K 47/00, A23L 33/105

(54) **VERFAHREN ZUR VERNETZUNG VON BIOPOLYMEREN**
METHOD FOR CROSSLINKING BIOPOLYMERS
PROCEDE POUR LA RETICULATION DE BIOPOLYMERES

(30) Priorität: 13.07.2016 DE 102016212745
(43) Veröffentlichungstag der Anmeldung: 17.01.2018
(73) Patentinhaber: NIG Nahrungs-Ingenieurtechnik GmbH, 39124 Magdeburg (DE); SUPERFRUITICALS SAS, 69160 Tassin la demi Lune (FR)
(72) Erfinder: de Koning, Adrianus Antonius Petrus, 69290 Craponne (FR); Wähling, Axel, 39120 Magdeburg (DE)
(74) Vertreter: Kailuweit & Uhlemann Patentanwälte Partnerschaft mbB

(56) Entgegenhaltungen:
- CN-A- 1 696 183
- DE-T2- 69 420 522
- DE-T2- 69 709 316
- KR-A- 20130 000 782
- US-A1- 2013 108 733
- DATABASE WPI Week 199538, Derwent World Patents Index; AN 1995-291227, XP002772794
- DATABASE WPI Week 201535, Derwent World Patents Index; AN 2015-23976W, XP002772791
- DATABASE WPI Week 201522, Derwent World Patents Index; AN 2015-164202, XP002772792
- DATABASE WPI Week 200918, Derwent World Patents Index; AN 2009-F61875, XP002772793
- RAJKUMAR TULSAWANI ET AL: "Efficacy of aqueous extract of Hippophae rhamnoides and its bio-active flavonoids against hypoxia-induced cell death", INDIAN JOURNAL OF PHARMACOLOGY, vol. 45, no. 3, 1 January 2013 (2013-01-01), IN, pages 258 - 263, XP055586764, ISSN: 0253-7613, DOI: 10.4103/0253-7613.111943
- DATABASE WPI Week 201377, Derwent World Patents Index; AN 2013-T04704
- DATABASE WPI Week 201144, Derwent World Patents Index; AN 2011-H24274
- DATABASE WPI Week 200868, Derwent World Patents Index; AN 2008-L66417
- DATABASE WPI Week 201327, Derwent World Patents Index; AN 2013-F56486

## Beschreibung

Die vorliegende Erfindung betrifft ein Verfahren zur Vernetzung von Biopolymeren mit Sanddornextrakten sowie die Verwendung von Sanddornextrakten als nicht toxisches Agens für die Vernetzung von Biopolymeren, wie Proteine, Peptide oder Polysaccharide. Solche Biopolymere finden unter anderem Verwendung in den Bereichen Lebensmittel, Futtermittel, Pharmazeutika oder Medizin oder anderen industriellen Applikationen.

Vernetze Biopolymere, wie Proteine oder Polysaccharide sind in der Natur weitverbreitet und finden vielfältige Anwendung bei der Produktion von Lebensmitteln, Futtermitteln, Enzymen, Verpackungsmaterialien oder in biomedizinischen Anwendungen, wie auch in industriellen Applikationen. Weiterhin findet die Vernetzung von Biopolymeren bei der Gerbung von Häuten und Fellen sowie bei der Textilveredlung Anwendung.

Zur Immobilisierung oder Vernetzung von Biopolymeren werden verschiedene Methoden verwendet, in denen z.B. Aldehyde oder Dialdehyde wie Formaldehyd oder Glutardialdehyd oder Essigsäure oder Enzyme oder die Vernetzung über Metallsalzkomplexe wie bei der Gerbung von Häuten eingesetzt werden. Als natürliche Komponenten zur Vernetzung von Biopolymeren sind u.a. die Verwendung von Iridoiden und Seicoiridoiden aus Olivenblättern beschrieben (EP 1 489 135 A1).

EP 1 489 135 A1 beschreibt im Detail die Nachteile des Standes der Technik. Insbesondere die toxikologischen Eigenschaften von Stoffen wie Formaldehyd oder Glutardialdehyd limitieren den Einsatz im Bereich der Lebensmittel, Futtermittel, Kosmetika oder in der Medizin. Die Verwendung von Schwermetallen bei der Ledergerbung weist erhebliche Nachteile aus human- und umwelttoxikologischer Sicht auf und implementiert aufwändige Behandlungen von Abwässern oder bei der Entsorgung von Abfallstoffen.

Es gibt einen steigenden Bedarf an natürlichen, insbesondere pflanzlichen Alternativen für die Vernetzung von Proteinen, die in ausreichender Menge und zu günstigen Kosten darstellbar sind.

CN 1 696 1 83 A betrifft die Verwendung von kondensierten Polyphenolen, wie Catechinen und/oder daraus gebildeten Tanninen, als Stärkevernetzungsmittel zur Herstellung von vernetzter Stärke und das aus pflanzlichem Polyphenol gewonnene natürliche Vernetzungsmittel zur Herstellung von vernetzter Stärke, sowie die reine Herstellung von pflanzlichem Polyphenol als Vernetzungsmittel.

US 2013/108733 A1 beschreibt ein Kaugummiprodukt, auf Basis einer vernetzten Gelatine-Matrix und ein Füllmittel aus Erythrit, Mannit oder Mischungen davon. Die vernetzte Gelatine-Matrix-Gummibasis umfasst ein Vernetzungsmittel, das ein Polyphenol oder eine Kombination von Polyphenolen ist. Als Beispiel für einen polyphenolhaltigen Pflanzenextrakt wird Grüntee-Extrakt genannt, welcher mehr als 90% Polyphenole erhält, vor allem Catechine. KR 2013 0000782 A beschreibt eine Protein-Polysaccharid-Hybridmembran, in der ein Gemisch aus einem lipophilen Arzneimittel und einem festen Lipid mit Tanninsäure vernetzt ist, wobei die Membran den Arzneimittelträger umgibt. Die Vernetzung von Membranen erfolgt durch natürliche Polyphenole, wie Tanninsäure, wobei 0,3 Gew.-% isolierte Tanninsäure, insbesondere Gallotannine mit einer Reinheit von über 95%, verwendet wird.

Sanddorn wächst weltweit auf mehr als 2 Mill ha. Die Verwendung der Früchte ist hinreichend beschrieben. Bei der Ernte der Früchte fallen erhebliche Mengen an Holz, Blättern und Rinde an. Diese Rohstoffe werden bisher nur in geringem Maße einer kommerziellen Verwertung zugeführt, haben aber auch das Potential einer zusätzlichen Wertschöpfung für die Landwirte. DE 694 20 522 T2 offenbart ein Nukleationsmittel für Eis aus einem Extrakt aus Beeren oder Blättern des Sanddorns sowie ein Verfahren zur Herstellung des Nukleationsmittels. Das Nukleationsmittel besteht bevorzugt aus einer Stoffmischung von Aminosäuren und Lipiden. Das Verfahren zur Herstellung des Nukleationsmittels umfasst die Extraktherstellung aus Beeren oder Blättern des Sanddorns. DE 697 09 316 T2 beschreibt eine proteinreiche, diätetische Eiscreme enthaltend bis zu 0,1 Masse-% Öl oder Ölextrakt von *Happophae rhamnoides L..* Auch KR 2008 0025479 A offenbart die Herstellung von Speiseeis mit einem Sanddornextrakt.

CN 103 181 414 A beschreibt einen Joghurt enthaltend natürliche Flavonoidverbindungen, insbesondere einen Sanddornextrakt mit einem Flavonoidgehalt von etwa 50 %, und dessen Herstellung, wobei die Farbe und der bittere Geschmack der Flavonoide durch Verkapselung reduziert werden. Die Verkapselung der Flavonoidkomposition wird mit Hilfe von Cyclodextrin erreicht, um die negative Beeinflussung der Farbe, der Struktur der Emulsion und des Geschmacks des Joghurt durch Zusatz der Flavonoide zu verhindern.

CN 104 256 375 A offenbart ein Instant-Nudelgericht enthaltend Sanddorn und ein Verfahren zu dessen Herstellung.

CN 104 365 803 A offenbart die Verwendung von Sanddornbeeren zur Herstellung eines Extrakts, insbesondere eines Polysaccharid-konzentrierten Sanddornbeerenextrakts, welcher für das Backen von Kuchen verwendet wird.

KR 2013 0031590 A offenbart funktionelle Nahrungsmittel, pharmazeutische Zusammensetzungen und kosmetische Zusammensetzungen zur Verhinderung der Hautalterung und Reduzierung der Faltenbildung enthaltend Sanddornfruchtextrakte, Kollagen, Blaubeerextrakt, Hyaluronsäure und Honig.

RU 2 028 796 C1 beschreibt den Zusatz von Sanddornextrakten zu kosmetischen Produkten für eine Hauterweichung, -reinigung und entzündungshemmende Wirkung.

CN 101 327 232 A offenbart die Herstellung und Reinigung eines Sanddorn-Flavonoid-Extrakts. Der Extrakt wird für medizinische Anwendungen sowie gesunde Ernährung u.a. gegen Husten, zur Aktivierung des Blutdrucks, zur Lösung von Stauungen, Vorbeugung von Gerinnungen, Verringerung des Blutdrucks beschrieben.

Tulsawani et al. offenbart die Behandlung von Zellen, insbesondere Hepatozyten oder auch Leberepitelzellen, mit einem wässrigen Sanddornextrakt zur Verhinderung von Hypoxieinduzierten Zelltod, wobei der Sanddornextrakt einen Gesamtphenolgehalt von etwa 120 mg/g Extrakt enthält, was etwa 12 % entspricht (Tulsawani R, Gupta R, Misra K (2013) Efficacy of aqueous extract of Hippophae rhamnoides and its bio-active flavonoids against hypoxiainduced cell death. Indian J Pharmacol. 45(3): 258-263). Tulsawani et al. beschreibt die Ursache des Zelltodes durch das Auftreten von Sauerstoffradikalen (reactive oxygene species, ROS) infolgedessen die Enzyme LDH, ALT und AST austreten können. Die Verhinderung des Zelltodes durch die Blockierung der Bildung von ROS durch den wässrigen Sanddornblattextrakt verhindert ein Austreten der Enzyme.

CN 102 058 631 A beschreibt die Herstellung eines Sanddornextrakts zur Verwendung in der Behandlung von Herzgefäßerkrankungen, wobei als optimale Flavonoidmenge 10 bis 200 mg pro Einheit (Tablette, Kapsel, etc.) genannt wird. Weiterhin wird die Vermischung eines pulverförmigen Sanddornextraktes mit 50 g Öl, 2 g Gelatine und 8 g Glyzerin beschrieben.

Aufgabe der Erfindung ist ein Verfahren zur Vernetzung von Biopolymeren mit Hilfe von Pflanzenextrakten bereitzustellen. Eine weitere Aufgabe der Erfindung ist es, natürliche Sanddornextrakte für die Vernetzung von Biopolymeren zur Verfügung zu stellen.

Gelöst wird die Aufgabe durch ein Verfahren zur Vernetzung von Biopolymeren, bei dem die Biopolymere mit Extrakten aus Sanddorn in Kontakt gebracht werden, um die genannten Biopolymere zu vernetzen, wobei die Sanddornextrakte aus bei der Sanddornfruchtverarbeitung anfallenden Sanddornpflanzen-Restbestandteilen oder nicht verwendeten Pflanzenbestandteilen, Holz, Blättern, Rinde und/oder Schösslingen gewonnen wurden und Polyphenole mit einem Gehalt von 10-95 Gew% bezogen auf die Trockenmasse im Extrakt enthalten, wobei die Polyphenole aus der Gruppe der Tannine, Flavonoide und Catechine stammen, wobei die Vernetzung der Biopolymere in einem wässrigen Milieu erfolgt, wobei die Biopolymere ausgewählt sind aus Proteinen, Peptiden und Polysacchariden, wobei die Vernetzung der Biopolymere durch Zusatz von 0,1 Gew.-% bis 100 Gew.-% des Sanddornextrakts bezogen auf das Biopolymer erfolgt.

Als Sanddornextrakte werden Extrakte aus oberirdischen Bestandteilen der Sanddornpflanze oder aus Reststoffen der Sanddornfruchtverarbeitung verwendet. Reststoffe der Sanddornfruchtverarbeitung sind bei der Sanddornfruchtverarbeitung anfallende Sanddornpflanzen-Restbestandteile oder nicht verwendete Pflanzenbestandteile. Sanddornbeeren bleiben der Fruchtverarbeitung vorbehalten. Geringe Beerenanteile bei der Extraktion der oberirdischen Bestandteile der Sanddornpflanze sind für die Vernetzungseigenschaften des Extraktes nicht schädlich.

Erfindungsgemäß sind bei der Sanddornfruchtverarbeitung anfallende Sanddornpflanzen-Restbestandteile oder nicht verwendete Pflanzenbestandteile Holz, Blätter, Rinde und/oder Schösslinge.

In einer Ausführungsform werden die Sanddornextrakte aus einer Sanddornsorte ausgewählt aus Ascola, Hergo, Leikora, Pollmix 1 und/oder Pollmix 4 verwendet, bevorzugt aus der Sanddornsorte Hergo.

Die Sanddornextrakte enthalten Polyphenole mit einem Gehalt von 10-95 Gew% (bezogen auf die Trockenmasse im Extrakt), wobei die Polyphenole aus der Gruppe der Tannine, Flavonoide und Catechine stammen. Die Bestimmung der Polyphenole kann mit der modifizierten Methode nach Folin-Ciocalteu (Singleton und Rossi (1965) Colorimetry of Total Phenolics with Phosphomolybdic-Phosphotungstic Acid Reagents. Am J Enol Vitic. 16: 144-158) erfolgen.

In einer bevorzugten Ausführungsform enthalten die Sanddornextrakte Polyphenole mit einem Gehalt von 25 Gew.-% bis 50 Gew.-% (bezogen auf die Trockenmasse des Sanddornextrakts).

Vorteilhaft führen die Polyphenole, insbesondere die hydrolisierbaren und kondensierten Tannine, zur Vernetzung der Biopolymere.

In einer Ausführungsform bestehen die Sanddornextrakte ausschließlich aus natürlichen Inhaltsstoffen, wobei unter natürlichen Inhaltsstoffen in der Natur vorkommende, pflanzliche Stoffe ohne Modifizierung verstanden werden.

Die Sanddornextrakte zur Vernetzung von Biopolymeren werden so gewonnen, dass Sanddorn-Pflanzenmaterial in getrockneter oder frischer Form, mit Wasser, einem organischen Lösungsmittel oder einem Gemisch aus Wasser und organischen Lösungsmittel als Extraktionsmittel und/oder Lösungsmittel extrahiert wird.

In einer Ausführungsform erfolgt das Verfahren zur Gewinnung von Sanddornextrakten zur Vernetzung von Biopolymeren durch die Extraktion von Sanddorn-Pflanzenmaterial in getrockneter oder frischer Form, mit Wasser, einem organischen Lösungsmittel oder einem Gemisch aus Wasser und organischen Lösungsmittel als Extraktionsmittel und/oder Lösungsmittel. In einer weiteren Ausführungsform erfolgt das Verfahren zur Gewinnung von Sanddornextrakten zur Vernetzung von Biopolymeren durch die Extraktion von Sanddorn-Pflanzenmaterial in gefrorener Form, mit Wasser, einem organischen Lösungsmittel oder einem Gemisch aus Wasser und organischen Lösungsmittel als Extraktionsmittel und/oder Lösungsmittel.

Die Extrakte werden aus den oberirdischen Pflanzenteilen wie Blätter, Holz und Rinde oder Schösslinge von Sanddorn oder aus Reststoffen der Sanddornfruchtverarbeitung gewonnen. Dabei kann das Material frisch, vorteilhafter getrocknet verarbeitet werden. Reststoffe der Sanddornfruchtverarbeitung sind bei der Sanddornfruchtverarbeitung anfallende Sanddornpflanzen-Restbestandteile oder nicht verwendete Pflanzenbestandteile. Sanddornbeeren bleiben der Fruchtverarbeitung vorbehalten. Geringe Beerenanteile bei der Extraktion der oberirdischen Bestandteile der Sanddornpflanze sind für die Vernetzungseigenschaften des Extraktes nicht schädlich.

Als Extraktionsmittel können Wasser, polare organische Lösungsmittel oder Mischungen polarer organischer Lösungsmittel mit Wasser verwendet werden. Polare organische Lösungsmittel im Sinne der vorliegenden Erfindung sind nach einer Ausgestaltung der Erfindung Alkohole oder Ketone. Besonders bevorzugt sind Alkohole mit 1 bis 4 Kohlenstoffatomen oder Ketone mit 1 bis 4 Kohlenstoffatomen. Beispiele für organische Lösungsmittel sind Methanol, Ethanol, 1-Propanol, Isopropanol, 1-Butanol, 2-Butanol, Ethylenglycol, Aceton, Butanon oder beliebige Mischungen der genannten Lösungsmittel.

Vorzugsweise ist das Extraktionsmittel bzw. Lösungsmittel ein Gemisch aus einer wässrigen Lösung und wenigstens einem polaren organischen Lösungsmittel. Dabei hat in der Regel das polare organische Lösungsmittel in dem Gemisch einen Anteil von 10 bis 95 Vol.-%. Bevorzugt ist ein Anteil des polaren organischen Lösungsmittels von 10 bis 90 Vol.-%, bevorzugter von 20 Vol.-% bis 80 Vol.-%, am bevorzugtesten von 30 bis 70 Vol.-%. Bevorzugte polare organische Lösungsmittel in dem Gemisch entsprechen den oben angegebenen bevorzugten polaren organischen Lösungsmitteln. Besonders bevorzugt sind ein Wasser/Alkohol- oder ein Wasser/Keton-Gemisch mit einem Lösungsmittelgehalt von 20 bis 80 Vol.-%.

Dem Extraktionsmittel können dabei Hilfsstoffe zur pH-Werteinstellung oder Herabsetzung der Oberflächenspannung zugesetzt werden. Die Extraktion erfolgt bei 20 °C bis 95 °C und bei pH-Werten von 2 bis 11.

Nach einer Ausgestaltung der Erfindung können dem Extraktionsmittel, insbesondere dem Wasser, Zusätze, insbesondere Säuren oder Alkalien und/oder anionische, nichtionische oder amphotere Tenside, zugegeben werden.

Die Extraktion kann mittels allgemein bekannter Verfahren, wie beispielsweise Mazeration, Perkolation oder Digestion kontinuierlich, diskontinuierlich, einstufig oder mehrstufig unter Normal- oder Überdruck erfolgen.

Die Aufarbeitung der Rohextrakte zur Anreicherung der Polyphenole kann dabei mittels Membranverfahren oder Adsorption erfolgen. Weiterhin kann die Aufarbeitung der Rohextrakte zur Anreicherung der Polyphenole dabei mittels Flüssig-Flüssig-Extraktion erfolgen.

In einer Ausführungsform erfolgt die Anreicherung der Polyphenole mittels eines Adsorberharzes.

Nach einer Ausführung des Verfahrens werden die Extrakte einer enzymatischen oder säurekatalytischen Behandlung unterzogen.

Durch säurekatalytische oder enzymatische Abspaltung der gebundenen Monosaccharide erfolgt eine verbesserte Aktivierung der Extrakte.

In einer Ausführungsform des Verfahrens erfolgt durch eine säurekatalytische oder enzymatische Behandlung der Extrakte eine Abspaltung der gebundenen Monosaccharide, wobei Aglycone entstehen. Unter Aglyconen werden organische Verbindungen verstanden, welche die Nicht-Monosaccharidkomponente in einem Glycosid darstellen. Als Aglycon kann beispielsweise Isorhamnetin aus Isorhamnetin-3-O-glycosid und/oder Quercetin aus Quercetin-3-O-rutinosid entstehen.

Nach einer Ausführung des Verfahrens erfolgt die enzymatische Behandlung mittels Glucosidasen. Unter Glucosidasen wird eine Gruppe von Enzymen verstanden, welche die Hydrolyse von glykosidisch gebundener Glukose katalysieren.

Nach einer weiteren Ausführung des Verfahrens werden die Extrakte einer Fermentation mit Mikroorganismen unterzogen. In einer Ausführungsform erfolgt die Fermentation mit Mikroorganismen, welche Glucosidasen bilden.

Die Extrakte können in Lösung oder als Pulver verwendet werden. Die Trocknung der Extrakte kann mittels bekannter Trocknungsverfahren erfolgen.

Als Biopolymere im Sinne der Erfindung werden Polymere bezeichnet, welche in der Zelle eines Lebewesens synthetisiert werden. Erfindungsgemäß sind Biopolymere ausgewählt aus Proteinen, Peptiden und Polysacchariden, bevorzugt sind Biopolymere Proteine.

In einer Ausführungsform können Proteine ausgewählt sein aus Milcheiweißen, bevorzugt Casein oder β-Lactoglobulin; und/oder Getreideeiweißen, bevorzugt Gliadine, Glutenin, Albumine oder Globuline; Kollagen oder Gelatine.

Vorteilhaft ist mit dem erfindungsgemäßen Verfahren keine Modifizierung der Biopolymere vor der Vernetzung durch Inkontaktbringen der Biopolymere mit den Sanddornextrakten nötig.

Erfindungsgemäß erfolgt die Vernetzung der Biopolymere in einem wässrigen Milieu. Unter einem Milieu wird die chemische Umgebung verstanden, in der sich das Biopolymer befindet und die Vernetzung des Biopolymers stattfindet. In einer Ausführungsform des Verfahrens umfasst das wässrige Milieu Wasser oder eine wässrige Pufferlösung.

In einer weiteren Ausführungsform des Verfahrens erfolgt die Vernetzung der Biopolymere durch Zusatz des Sanddornextrakts zu dem wässrigen Milieu.

Erfindungsgemäß erfolgt die Vernetzung der Biopolymere durch Zusatz von 0,1 Gew.-% bis 100 Gew.-% des Sanddornextrakts bezogen auf das Biopolymer, bevorzugt 0,5 Gew.-% bis 50 Gew.-% des Sanddornextrakts bezogen auf das Biopolymer.

In einer weiteren Ausführungsform des Verfahrens erfolgt die Vernetzung der Biopolymere für einen Zeitraum von 1 h bis 72 h.

Die Erfindung betrifft auch die Verwendung der erfindungsgemäßen Sanddornextrakte allein oder in Mischungen, zur Vernetzung von Biopolymeren im Bereich Lebensmittel, Futtermittel, Kosmetika und Pharmazeutika, sowie medizinischer Produkte oder zur industriellen Applikation, zur Gerbung von Häuten und Fellen, sowie zur Textilveredelung, wobei die Sanddornextrakte aus bei der Sanddornfruchtverarbeitung anfallenden Sanddornpflanzen-Restbestandteilen oder nicht verwendeten Pflanzenbestandteilen, Holz, Blättern, Rinde und/oder Schösslingen gewonnen wurden und Polyphenole mit einem Gehalt von 10-95 Gew% bezogen auf die Trockenmasse im Extrakt enthalten, wobei die Polyphenole aus der Gruppe der Tannine, Flavonoide und Catechine stammen, wobei die Biopolymere ausgewählt sind aus Proteinen, Peptiden und Polysacchariden.

Erfindungsgemäß erfolgt die Verwendung von Extrakten aus Sanddorn zur Vernetzung von Biopolymeren im Bereich Lebensmittel, Futtermittel, Kosmetika und Pharmazeutika, sowie medizinischer Produkte oder in industriellen Applikationen, zur Gerbung von Häuten und Fellen, sowie zur Textilveredelung.

Erfindungsgemäß werden als Sanddornextrakte Extrakte aus oberirdischen Bestandstandteilen der Sanddornpflanze oder aus Reststoffen der Sanddornfruchtverarbeitung verwendet.

In einer Ausführungsform erfolgt die Verwendung von Extrakten aus Sanddorn zur Vernetzung von Biopolymeren durch die Extraktion von Sanddorn-Pflanzenmaterial in getrockneter oder frischer Form, mit Wasser, einem organischen Lösungsmittel oder einem Gemisch aus Wasser und organischen Lösungsmittel als Extraktionsmittel und/oder Lösungsmittel.

In einer Ausführungsform erfolgt die Verwendung von Extrakten aus Sanddorn zur Vernetzung von Biopolymeren, wobei das als Extraktionsmittel verwendete Gemisch aus Wasser und organischem Lösungsmittel 10 bis 95 Vol.-% organisches Lösungsmittel enthält.

In einer Ausführungsform erfolgt die Verwendung von Extrakten aus Sanddorn zur Vernetzung von Biopolymeren, wobei dem Extraktionsmittel Zusätze, insbesondere Säuren oder Alkalien und/oder anionische, nichtionische oder amphotere Tenside, zugegeben werden.

In einer Ausführungsform erfolgt die Verwendung von Extrakten aus Sanddorn zur Vernetzung von Biopolymeren, wobei die Extrakte einer enzymatischen oder säurekatalytischen Behandlung unterzogen werden.

Anhand nachfolgender Ausführungsbeispiele wird die Erfindung näher erläutert.

### Bestimmung der Polyphenole:

Die Bestimmung der Polyphenole erfolgt mit einer modifizierten Methode nach Folin-Ciocalteu (Singleton und Rossi (1965) Colorimetry of Total Phenolics with Phosphomolybdic-Phosphotungstic Acid Reagents. Am J Enol Vitic. 16: 144-158).

### Bestimmung der Flavoniode:

Die Flavonoide werden mittels HPLC an einer RP 18-Säule gemessen. Die Kalkulation der Gehalte erfolgt mittels externer Standards (Quercetin-3-O-rutinosid, Isorhamnetin-3-O-rutinosid, Isorhamnetin-3-O-glucosid, Quercetin und Isorhamnetin).

Die Bestimmung der Gehalte an Eiweiß, Zucker, Fett und Asche erfolgten gemäß der Methoden des Lebensmittel-, Bedarfsgegenstände- und Futtermittelgesetzbuch (LFBG, 2013).

### Beispiel 1:

Getrocknete und gemahlene Sanddornblätter werden mit Wasser bei einer Temperatur von 40 °C erschöpfend extrahiert. Der Extrakt wird filtriert, konzentriert und getrocknet. Der Polyphenolgehalt des erhaltenen Extraktes beträgt 20 Gew% (bezogen auf die Trockenmasse im Extrakt).

In einer alternativen Ausgestaltung des Beispiels 1 erfolgt die Verwendung von Sanddornblättern der Sorte Hergo und das Verhältnis der Masse der getrockneten und gemahlenen Sanddornblätter zur Masse des Extraktionsmittels beträgt 1:10. Der Polyphenolgehalt des erhaltenen Extraktes beträgt 15 Gew.-% (bezogen auf die Trockenmasse im Extrakt) und die Extraktausbeute 17 %.

Unter der Extraktausbeute wird die extrahierte Trockenmasse bezogen auf die Masse der getrockneten und gemahlenen Sanddornblätter verstanden.

### Beispiel 2

Getrocknete und gemahlene Sanddornblätter werden mit Wasser bei einer Temperatur von 40 °C erschöpfend extrahiert. Nach der Filtration des Extraktes erfolgt eine pH-Werteinstellung auf pH 7, gefolgt von einer Dosierung von ß-Glucosidase (aus Mandeln). Die Inkubation erfolgt 3 h bei 25 °C. Die Kontrolle des Abbaus der glycosidisch gebundenen Polyphenole erfolgt an Hand der Moleküle Isorhamnetin-3-O-glucosid zu Isorhamnetin und Quercetin-3-O-rutinosid zu Quercetin mittels HPLC. Mehr als 80 % der Glycoside wurden abgebaut. Der Extrakt wird filtriert, konzentriert und getrocknet.

### Beispiel 3

Getrocknete und gemahlene Sanddornblätter der Sorte Hergo werden mit einem Ethanol/Wasser-Gemisch, wobei der Masseanteil an Ethanol 60 % beträgt, bei einer Temperatur von 40 °C erschöpfend extrahiert. Das Verhältnis der Masse der getrockneten und gemahlenen Sanddornblätter zur Masse des Extraktionsmittels beträgt 1:10. Der Extrakt wird filtriert, konzentriert und getrocknet. Der Polyphenolgehalt des erhaltenen Extraktes beträgt 20 Gew% (bezogen auf die Trockenmasse im Extrakt). Die Extraktausbeute beträgt 20 %.

**Tab. 1 Polyphenol-, Flavonoid-, Eiweiß-, Gesamtzucker- und Aschegehalt der Sanddornextrakte nach Beispiel 1 und 3: Werte bezogen auf Trockenmasse des Extrakts.**

| | Polyphenole | Flavoniode | Eiweiß | Gesamtzucker | Asche |
|---|---|---|---|---|---|
| Extrakt nach alternativer Ausgestaltung Beispiel 1 | 15 Gew.-% | 2,9 Gew.-% | 7 Gew.-% | 21 Gew.-% | 12 Gew.-% |
| Extrakt nach Beispiel 3 | 20 Gew.-% | 3,8 Gew.-% | 5 Gew.-% | 16 Gew.-% | 9 Gew.-% |

### Beispiel 4

Fettfreier Naturjoghurt wird mit 15 g/L des Trockenextraktes nach Beispiel 1 versetzt. Nach einer Inkubationszeit von 24 h bei 11 °C wurde die Viskosität mittels Bostwick-Consistometer geprüft. Das Ergebnis des Experiments zeigte, dass der Zusatz des erfindungsgemäßen Sanddornextraktes zu einer Erhöhung der Viskosität führt.

### Beispiel 5

Zum Nachweis der Vernetzungseigenschaften des Sanddornextraktes nach Beispiel 1 wird eine Lösung aus Casein verwendet. Eine Lösung von 10 g/l Casein in Natriumphosphatpuffer (pH 7) wird mit 10 g/l Sanddornextrakt nach Beispiel 1 versetzt. Die Inkubation erfolgt bei Raumtemperatur für 45 min. Anhand der auftretenden Trübung in der Lösung wird die Vernetzung der Casein-Lösung nachgewiesen.

### Beispiel 6

Zum Nachweis der Vernetzungseigenschaften des Sanddornextraktes nach Beispiel 3 wird eine 2,5 Gew.-%-ige wässrige Gelatinelösung angesetzt. Der getrocknete Sanddornextrakt nach Beispiel 3 wird in einer Konzentration von 2,5 Gew.-% in einer wässrigen Lösung angesetzt und über einen 0,45 µm Filter klarfiltriert. Beide klaren Lösungen werden im Verhältnis 1:1 bei Raumtemperatur vermischt. Die Vernetzung der Gelatine durch Zusatz der Sanddornextraktlösung wird durch unmittelbar eintretende Trübung der Lösung visualisiert.

### Beispiel 7

Bei der Silierung von Tierfutter auf Basis von Gräsern wird der Silage Sanddornextrakt nach Beispiel 1 zugegeben. Ab einer Zugabe von 5 Gew.-% Sanddornextrakt bezogen auf die Masse der Silage können die Proteine in der Silage vor einer Hydrolyse geschützt werden und somit dessen Futterwert verbessert werden. Durch die Zugabe des Sanddornextrakts wird der Hydrolysegrad der Proteine im Tierfutter um 18 % reduziert. Die Bestimmung des Hydrolysegrads der Proteine erfolgt mittels der OPA-Methode (Frister H, Meisel H, Schlimme E (1990) Einsatzmöglichkeiten der modifizierten OPA-Methode in der Proteinanalytik. Ernährungs-Umschau 37:442-445).

### Beispiel 8

Der Sanddornextrakt nach Beispiel 2 wird zur Gerbung und Nachgerbung von Schafshäuten eingesetzt. Der Sanddornextrakt wird mit 25 Gew.-% bezogen auf die Masse der Schafshaut eingesetzt. Es konnte gezeigt werden, dass die Gerbung von Schafshäuten durch das Vernetzen der Proteinstrukturen möglich ist. Die erreichten Schrumpftemperaturen lagen bei 68 °C bis 74 °C.

## Patentansprüche

1. Verfahren zur Vernetzung von Biopolymeren, **dadurch gekennzeichnet, dass** Biopolymere mit Extrakten aus Sanddorn in Kontakt gebracht werden, um die Biopolymere zu vernetzen,
wobei die Sanddornextrakte aus bei der Sanddornfruchtverarbeitung anfallenden Sanddornpflanzen-Restbestandteilen oder nicht verwendeten Pflanzenbestandteilen, Holz, Blättern, Rinde und/oder Schösslingen gewonnen wurden und Polyphenole mit einem Gehalt von 10-95 Gew% bezogen auf die Trockenmasse im Extrakt enthalten, wobei die Polyphenole aus der Gruppe der Tannine, Flavonoide und Catechine stammen,
wobei die Vernetzung der Biopolymere in einem wässrigen Milieu erfolgt,
wobei die Biopolymere ausgewählt sind aus Proteinen, Peptiden und Polysacchariden, wobei die Vernetzung der Biopolymere durch Zusatz von 0,1 Gew.-% bis 100 Gew.-% des Sanddornextrakts bezogen auf das Biopolymer erfolgt.

2. Verfahren nach Anspruch 1, **dadurch gekennzeichnet, dass** die Sanddornextrakte zur Vernetzung von Biopolymeren durch die Extraktion von Sanddorn-Pflanzenmaterial in getrockneter oder frischer Form, mit Wasser, einem organischen Lösungsmittel oder einem Gemisch aus Wasser und organischen Lösungsmittel als Extraktionsmittel und/oder Lösungsmittel gewonnen werden.

3. Verfahren nach Anspruch 2, **dadurch gekennzeichnet, dass** das als Extraktionsmittel verwendete Gemisch aus Wasser und organischem Lösungsmittel 10 bis 95 Vol.-% organisches Lösungsmittel enthält.

4. Verfahren nach Anspruch 2 oder 3, **dadurch gekennzeichnet, dass** dem Extraktionsmittel Zusätze, insbesondere Säuren oder Alkalien und/oder anionische, nichtionische oder amphotere Tenside, zugegeben werden.

5. Verfahren nach einem der Ansprüche 2 bis 4, **dadurch gekennzeichnet, dass** die Extrakte einer enzymatischen oder säurekatalytischen Behandlung unterzogen werden.

6. Verwendung von Extrakten aus Sanddorn zur Vernetzung von Biopolymeren im Bereich Lebensmittel, Futtermittel, Kosmetika und Pharmazeutika, sowie medizinischer Produkte oder in industriellen Applikation, zur Gerbung von Häuten und Fellen, sowie zur Textilveredelung,
wobei die Sanddornextrakte aus bei der Sanddornfruchtverarbeitung anfallenden Sanddornpflanzen-Restbestandteilen oder nicht verwendeten Pflanzenbestandteilen, Holz, Blättern, Rinde und/oder Schösslingen gewonnen wurden und Polyphenole mit einem Gehalt von 10-95 Gew% bezogen auf die Trockenmasse im Extrakt enthalten, wobei die Polyphenole aus der Gruppe der Tannine, Flavonoide und Catechine stammen,
wobei die Biopolymere ausgewählt sind aus Proteinen, Peptiden und Polysacchariden.

7. Verwendung nach Anspruch 6, **dadurch gekennzeichnet, dass** die Sanddornextrakte zur Vernetzung von Biopolymeren durch die Extraktion von Sanddorn-Pflanzenmaterial in getrockneter oder frischer Form, mit Wasser, einem organischen Lösungsmittel oder einem Gemisch aus Wasser und organischen Lösungsmittel als Extraktionsmittel und/oder Lösungsmittel gewonnen werden.

8. Verwendung nach Anspruch 7, **dadurch gekennzeichnet, dass** das als Extraktionsmittel verwendete Gemisch aus Wasser und organischem Lösungsmittel 10 bis 95 Vol.-% organisches Lösungsmittel enthält.

9. Verwendung nach Anspruch 7 oder 8, **dadurch gekennzeichnet, dass** dem Extraktionsmittel Zusätze, insbesondere Säuren oder Alkalien und/oder anionische, nichtionische oder amphotere Tenside, zugegeben werden.

10. Verwendung nach einem der Ansprüche 7 bis 9, **dadurch gekennzeichnet, dass** die Extrakte einer enzymatischen oder säurekatalytischen Behandlung unterzogen werden.

## Claims

1. Method for cross-linking biopolymers, **characterised in that** biopolymers are brought into contact with extracts from sea buckthorn in order to cross-link the biopolymers,
wherein the sea buckthorn extracts are obtained from sea buckthorn plant residues accumulated during sea buckthorn fruit processing or unused plant components, wood, leaves, bark and/or shoots, and contain polyphenols with a content of 10-95% by weight based on the dry matter in the extract, wherein the polyphenols originate from the group of tannins, flavonoids and catechins,
wherein the cross-linking of the biopolymers takes place in an aqueous environment,
wherein the biopolymers are selected from proteins, peptides and polysaccharides, wherein the cross-linking of the biopolymers is effected by adding 0.1% by weight to 100% by weight of the sea buckthorn extract based on the biopolymer.

2. Method according to claim 1, **characterised in that** the sea buckthorn extracts for cross-linking biopolymers are obtained by extracting sea buckthorn plant material in dried or fresh form with water, an organic solvent or a mixture of water and organic solvents as extractant and/or solvent.

3. Method according to claim 2, **characterised in that** the mixture of water and organic solvent used as extractant contains 10 to 95% by volume of organic solvent.

4. Method according to claim 2 or 3, **characterised in that** additives, in particular acids or alkalis and/or anionic, non-ionic or amphoteric surfactants, are added to the extractant.

5. Method according to one of claims 2 to 4, **characterised in that** the extracts are subjected to enzymatic or acid-catalysed treatment.

6. Use of extracts from sea buckthorn for cross-linking biopolymers in the field of food, animal feed, cosmetics and pharmaceuticals, as well as medical products or in industrial applications, for tanning hides and furs, as well as for textile finishing,
wherein the sea buckthorn extracts are obtained from sea buckthorn plant residues accumulated during sea buckthorn fruit processing or unused plant components, wood, leaves, bark and/or shoots, and contain polyphenols with a content of 10-95% by weight based on the dry matter in the extract, wherein the polyphenols originate from the group of tannins, flavonoids and catechins,
wherein the biopolymers are selected from proteins, peptides and polysaccharides.

7. Use according to claim 6, **characterised in that** the sea buckthorn extracts for cross-linking biopolymers are obtained by extracting sea buckthorn plant material in dried or fresh form with water, an organic solvent or a mixture of water and organic solvent as extractant and/or solvent.

8. Use according to claim 7, **characterised in that** the mixture of water and organic solvent used as the extractant contains 10 to 95% by volume of organic solvent.

9. Use according to claim 7 or 8, **characterised in that** additives, in particular acids or alkalis and/or anionic, non-ionic or amphoteric surfactants, are added to the extractant.

10. Use according to any one of claims 7 to 9, **characterised in that** the extracts are subjected to enzymatic or acid-catalysed treatment.

## Revendications

1. Procédé de réticulation de biopolymères, **caractérisé en ce que** les biopolymères sont mis en contact avec des extraits d'argousier pour réticuler les biopolymères,
les extraits d'argousier étant obtenus à partir de résidus de la plante d'argousier ou de parties non utilisées de la plante, bois, feuilles, écorce et/ou rejetons issues de la transformation des fruits d'argousier et contenant des polyphénols à une teneur de 10 à 95 % en poids par rapport à la masse sèche de l'extrait,
les polyphénols appartenant aux groupes des tanins, des flavonoïdes et des catéchines,
la réticulation des biopolymères ayant lieu en milieu aqueux,
les biopolymères étant choisis parmi les protéines, les peptides et les polysaccharides, et la réticulation étant effectuée par l'ajout de 0,1 % à 100 % en poids d'extrait d'argousier par rapport au biopolymère.

2. Procédé selon la revendication 1, **caractérisé en ce que** les extraits d'argousier pour la réticulation de biopolymères sont obtenus par extraction de la matière végétale d'argousier, fraîche ou séchée, à l'aide d'eau, d'un solvant organique ou d'un mélange d'eau et de solvant organique comme agent d'extraction et/ou solvant.

3. Procédé selon la revendication 2, **caractérisé en ce que** le mélange d'eau et de solvant organique utilisé comme agent d'extraction contient de 10 à 95 % en volume de solvant organique.

4. Procédé selon la revendication 2 ou 3, **caractérisé en ce que** des additifs, notamment des acides ou des alcalis et/ou des tensioactifs anioniques, non ioniques ou amphotères, sont ajoutés à l'agent d'extraction.

5. Procédé selon l'une quelconque des revendications 2 à 4, **caractérisé en ce que** les extraits sont soumis à un traitement enzymatique ou acido-catalytique.

6. Utilisation d'extraits d'argousier pour la réticulation de biopolymères dans les secteurs de l'alimentation humaine et animale, des cosmétiques et de la pharmacie, ainsi que dans les produits médicaux ou les applications industrielles, pour le tannage des cuirs et des fourrures, et pour l'ennoblissement des textiles,
les extraits d'argousier étant obtenus à partir de résidus de la plante d'argousier ou de parties non utilisées de la plante, bois, feuilles, écorce et/ou rejetons issues de la transformation des fruits d'argousier et contenant des polyphénols à une teneur de 10 à 95 % en poids par rapport à la masse sèche de l'extrait, les polyphénols appartenant aux groupes des tanins, des flavonoïdes et des catéchines,
les biopolymères étant choisis parmi les protéines, les peptides et les polysaccharides.

7. Utilisation selon la revendication 6, **caractérisée en ce que** les extraits d'argousier pour la réticulation des biopolymères sont obtenus par extraction de la matière végétale d'argousier, fraîche ou séchée, à l'aide d'eau, d'un solvant organique ou d'un mélange d'eau et de solvant organique comme agent d'extraction et/ou solvant.

8. Utilisation selon la revendication 7, **caractérisée en ce que** le mélange d'eau et de solvant organique utilisé comme agent d'extraction contient de 10 à 95 % en volume de solvant organique.

9. Utilisation selon la revendication 7 ou 8, **caractérisée en ce que** des additifs, notamment des acides ou des alcalis et/ou des tensioactifs anioniques, non ioniques ou amphotères, sont ajoutés à l'agent d'extraction.

10. Utilisation selon l'une quelconque des revendications 7 à 9, **caractérisée en ce que** les extraits sont soumis à un traitement enzymatique ou acido-catalytique.
